# EUROPEAN PATENT APPLICATION

(11) **EP 4 613 136 A1**
(43) Date of publication of application: **10.09.2025**
(21) Application number: 22964365.5
(22) Date of filing: 31.10.2022
(51) Int. Cl.: A24F 40/65, A24F 40/40

(54) **GENERATION DEVICE AND COVER**

(71) Applicant: Japan Tobacco Inc., Tokyo 105-6927 (JP)
(72) Inventor: FUJIKI, Takashi, Tokyo 130-8603 (JP); YOSHIDA, Ryo, Tokyo 130-8603 (JP)
(74) Representative: Hoffmann Eitle
(86) International application number: PCT/JP2022/040792
(87) International publication number: WO 2024/095342

(57) **Abstract**

A cover which is attached to a main body having a heating unit for heating a substrate that contains an aerosol source and thereby permits heating of the heating unit by means of the main body, the cover comprising: a first communication unit which performs communication by a short-range wireless communication method; a second communication unit which performs communication by a wireless communication method that also enables communication over a longer distance than a communication distance of the first communication unit; a memory unit for storing information of a first other cover, which is another cover that has been present for more than a predetermined time within a predetermined distance, the information being detected via the first communication unit; an acquisition unit for acquiring, via the second communication unit, a notification that the main body to which the other cover is attached has performed heating; and a reporting unit which, when the information of the first other cover stored in the memory unit contains information of a second other cover, which is another cover, based on the notification acquired by the acquisition unit, either outputs location information of said second other cover via the first communication unit or the second communication unit, or causes a display unit to display said location information of the second other cover.

## Description

### [Technical Field]

The present disclosure relates to a generating device and a cover.

### [Background Art]

PTL 1 describes a participatory map site providing helpful information for smokers, such as smoking areas and smoking-permitted places. In PTL 1, the information on the map site is not confined to information provided by a distributor, and users who are themselves smokers participate in viewing and creating the map site via personal computers and mobile terminals, thereby enabling interactive map creation which was not possible in the past.

### [Citation List]

### [Patent Literature]

[PTL 1] JP 2012-104085 A

### [Summary of Invention]

### [Technical Problem]

There is room for further improvement in a configuration providing information only on smoking-permitted places set by a distributor of smoking-permitted places or other smokers, in terms of obtaining a greater amount of information relating to smoking-permitted places.

The objective of the present disclosure lies in enabling smokers to also be informed of smoking-permitted places that have not been set by a distributor or another smoker.

### [Solution to Problem]

The present disclosure provides a generating device for generating an aerosol by heating a substrate that contains an aerosol source, the generating device comprising: a first communication unit which performs communication by a short-range wireless communication method; a second communication unit which performs communication by a wireless communication method that also enables communication over a longer distance than a communication distance of the first communication unit; a memory unit for storing information of a first other device, which is another generating device that has been present for more than a predetermined time within a predetermined distance, the information being detected via the first communication unit; an acquisition unit for acquiring, via the second communication unit, a notification that the other generating device has performed heating; and a reporting unit which, when the information of the first other device stored in the memory unit contains information of a second other device, which is another generating device, based on the notification acquired by the acquisition unit, either outputs location information of said second other device via the first communication unit or the second communication unit, or causes a display unit to display said location information of the second other device.

The generating device should have a configuration comprising: a main body having a heating unit for heating a substrate that contains an aerosol source; and a cover which permits heating of the heating unit by means of the main body, as a result of the cover being attached to the main body, wherein the first communication unit, the second communication unit, the memory unit, the acquisition unit, and the reporting unit are provided in the main body.

The generating device should have a configuration comprising: a main body having a heating unit for heating a substrate that contains an aerosol source; and a cover which permits heating of the heating unit by means of the main body, as a result of the cover being attached to the main body, wherein any of the first communication unit, the second communication unit, the memory unit, the acquisition unit, and the reporting unit is provided in the main body, while the others are provided on the cover. In this case, the first communication unit should be provided on the cover, and the second communication unit, the memory unit, the acquisition unit, and the reporting unit should be provided in the main body.

Furthermore, the present disclosure also provides a cover which is attached to a main body having a heating unit for heating a substrate that contains an aerosol source and thereby permits heating of the heating unit by means of the main body, the cover comprising: a first communication unit which performs communication by a short-range wireless communication method; a second communication unit which performs communication by a wireless communication method that also enables communication over a longer distance than a communication distance of the first communication unit; a memory unit for storing information of a first other cover, which is another cover that has been present for more than a predetermined time within a predetermined distance, the information being detected via the first communication unit, an acquisition unit for acquiring, via the second communication unit, a notification that the main body to which the other cover is attached has performed heating; and a reporting unit which, when the information of the first other cover stored in the memory unit contains information of a second other cover, which is another cover, based on the notification acquired by the acquisition unit, either outputs location information of said second other cover via the first communication unit or the second communication unit, or causes a display unit to display said location information of the second other cover.

### [Advantageous Effects of Invention]

The present disclosure enables smokers to also be informed of smoking-permitted places that have not been set by a distributor or another smoker.

### [Brief Description of Drawings]

[Fig. 1] is a diagram in which a front face side of an aerosol generating device is viewed from diagonally above.
[Fig. 2] is a diagram in which the front face side of the aerosol generating device is viewed from diagonally below.
[Fig. 3] is a diagram in which the aerosol generating device from which a shutter has been removed is viewed from above.
[Fig. 4] is a diagram in which a main body device with a front panel removed is viewed from a front face.
[Fig. 5] is a view of a rear face of the front panel removed from the main body device.
[Fig. 6] is a diagram schematically showing an internal configuration of the aerosol generating device2
[Fig. 7] is a diagram schematically showing connection relationships of a power source system circuit in the front panel and the main body device.
[Fig. 8] is a flowchart illustrating an example of an operation before heating performed by the control unit in the main body device of the aerosol generating device.
[Fig. 9] is a diagram illustrating a situation in which information of an aerosol generating device of another smoker who was smoking together in a first smoking area is acquired and stored.
[Fig. 10] is a diagram illustrating a situation in which a notification from an aerosol generating device of another smoker who is smoking in a second smoking area is acquired and crosschecked.
[Fig. 11] shows an example of display of location information of a smoking area provided by an aerosol generating device.
[Fig. 12] is a block diagram of a front cover for realizing a first operating exampleT
[Fig. 13] is a flowchart illustrating the first operating example.
[Fig. 14] is a block diagram of a front cover for realizing a second operating example.
[Fig. 15] is a flowchart illustrating the second operating example.
[Fig. 16] is a block diagram of a front cover for realizing a third operating example.
[Fig. 17] is a flowchart illustrating the third operating example.

### [Description of Embodiments]

Embodiments of the present disclosure will be described in detail below with reference to the appended drawings. An aerosol generating device according to the embodiments is a form of electronic cigarette. A substance generated by the aerosol generating device is an aerosol. An aerosol is a mixture of minute liquid or solid particles suspended in a gas, and air or another gas. The embodiments describe aerosol generating devices which generate the aerosol without associated burning. Furthermore, the embodiments describe aerosol generating devices to which a solid aerosol source can be fitted.

### <Device Configuration>

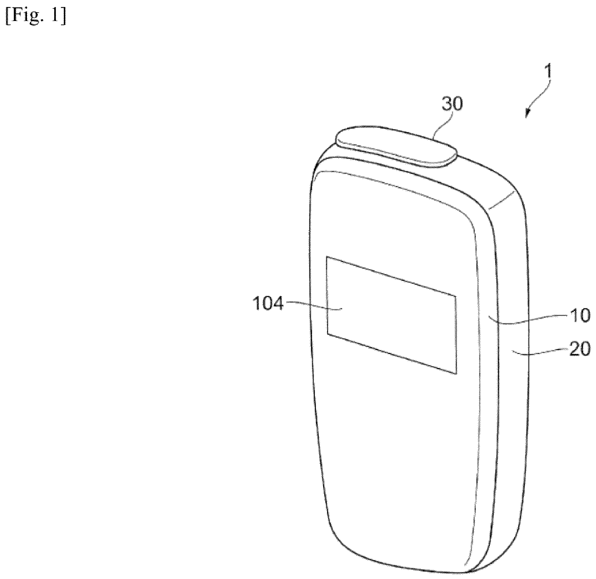

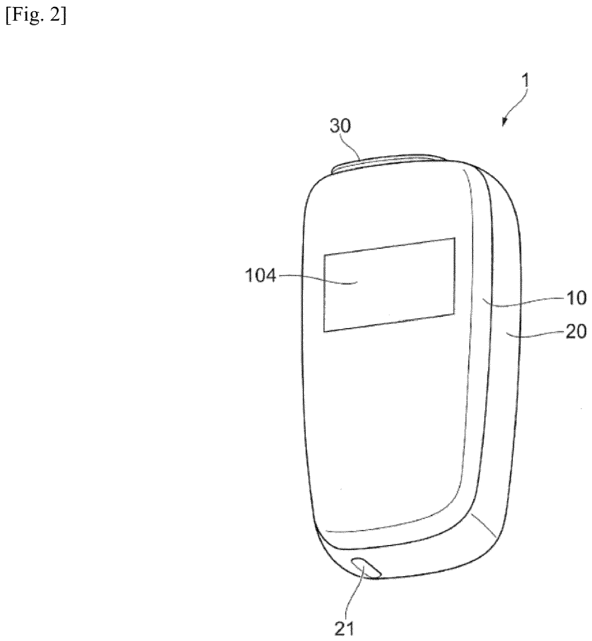

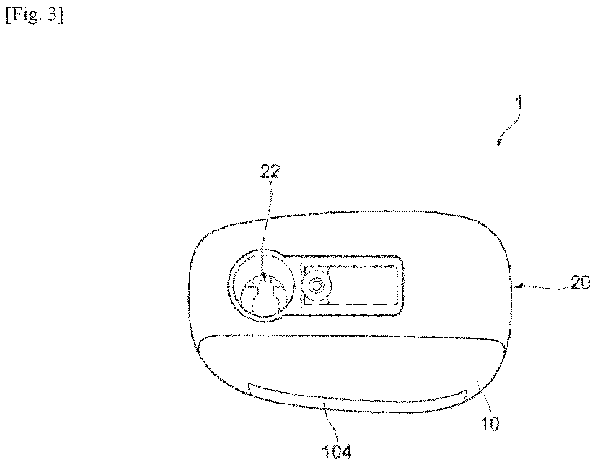

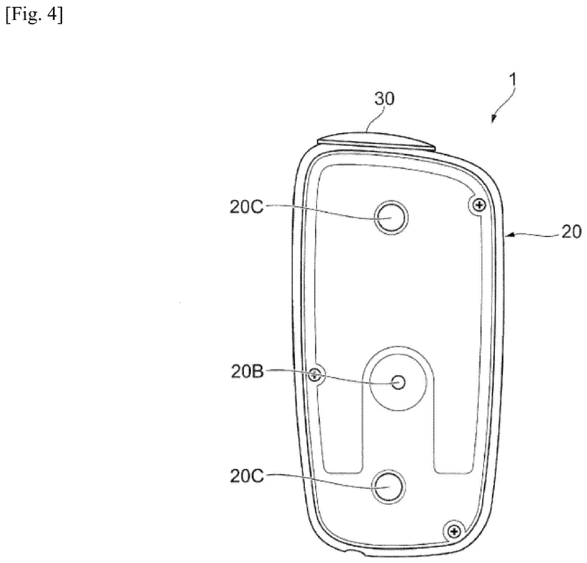

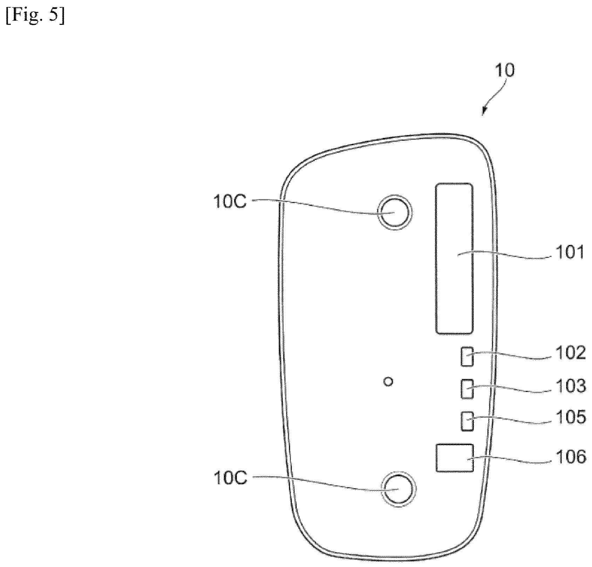

Fig. 1 is a diagram in which a front face side of an aerosol generating device is viewed from diagonally above. Fig. 2 is a diagram in which the front face side of the aerosol generating device is viewed from diagonally below. Fig. 3 is a diagram in which the aerosol generating device from which a shutter has been removed is viewed from above. Fig. 4 is a diagram in which a main body device with a front panel removed is viewed from a front face. Fig. 5 is a view of a rear face of the front panel removed from the main body device.

An aerosol generating device 1 has a size such that a user can hold it in one hand. The aerosol generating device 1 comprises: a main body device 20; a front cover 10 attached to a front face of the main body device 20; and a shutter 30 which is disposed on an upper face of the main body device 20 and can be slidably operated along the upper face. The aerosol generating device 1 is an example of a generating device. The main body device 20 is an example of a main body. The front cover 10 is an example of a cover. The front cover 10 is a member that can attached to/detached from the main device body 20.

The front cover 10 attached to the main body device 20 covers a front face part of the main body device 20, as shown in fig. 1 and 2. In other words, parts of the main body device 20 other than the front face part are not covered by the front cover 10 even after the front cover 10 has been attached. A state is therefore maintained in which side faces, a back face, an upper face, and a bottom face of the main body device 20 are still visible from the outside after attachment of the front cover 10. The front cover 10 attached to the main body device 20 joins continuously and steplessly with the side faces, upper face and bottom face of the main body device 20, as shown in fig. 1 and 2, forming an integral external appearance.

In a state in which the front cover 10 is attached to the main body device 20, the front cover 10 has the external appearance of being continuously joined to the main body device 20, as described above, and thus has a decorative role. Furthermore, the front cover 10 also has the role of alleviating propagation of heat released from the main body device 20, etc. In addition, the front cover 10 has the role of protecting the main body device 20 from soiling and scratches, etc.

A power source unit 101 capable of charging/discharging electricity; a charging circuit 102 for charging the power source unit 101 using power supplied from the main body device 20; and an electrical supply circuit 103 for supplying the main body device 20 with power stored in the power source unit 101 are attached to an inner side of the front cover 10. A film-type lithium ion secondary battery or a capacitor, for example, is used for the power source unit 101. It should be noted that the arrangement of the power source unit 101, the charging circuit 102, and the electrical supply circuit 103 in fig. 5 is merely an example, and the arrangement is not limited to that depicted. Furthermore, a plurality of power source units 101 may be fitted to the front cover 10. A notification unit 104 may further be provided on an outer side of the front cover 10, as shown in fig. 1 and 2. It should be noted that the arrangement of the notification unit 104 shown in fig. 1 and 2 is merely an example, and the arrangement is not limited to that depicted.

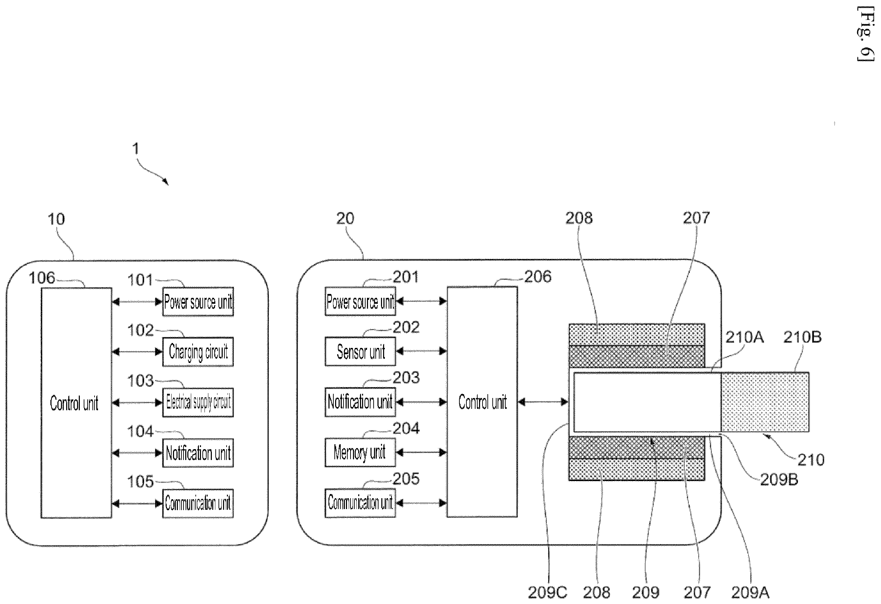

A connector 21 for charging a power source unit 201 (see fig. 6) built into the main body device 20 is provided on the bottom face side of the main body device 20. There is no particular limitation as to the form of the connector 21, and a Type-C USB (= universal serial bus) connector may be used, to give one example.

A hole 22 for insertion of a stick-type substrate 210 (see fig. 6) accommodating an aerosol source is provided in an upper face portion of the main body device 20. The stick-type substrate 210 used in the embodiment accommodates a solid aerosol source in a paper tube molded substantially into a cylindrical shape. The hole 22 is exposed by sliding the shutter 30 to an open position, and hidden by sliding the shutter 30 to a closed position. The hole 22 has a cylindrical shape virtually the same as that of the stick-type substrate 210. The diameter of an opening part of the hole 22 constitutes the dimension of a stick-type substrate 210 of cylindrical cross section which can be inserted.

A magnet, for example, is attached to a rear face of the shutter 30. Meanwhile, a Hall IC is attached to the main body device 20 in a movable range of the shutter 30. The Hall IC is a magnetic sensor formed by a Hall element and an operational amplifier, etc., and outputs a voltage commensurate with the intensity of the magnetic field passing across the Hall element. The shutter 30 being in an open position or a closed position is detected from a change in the voltage output from the Hall IC accompanying sliding of the shutter 30.

A button 20B is disposed substantially in the center of the front face of the main body device 20. When a position on the front cover 10 corresponding to the button 20B is pushed in while the front cover 10 is attached to the main body device 20, the front cover 10 deforms and the button 20B is pressed. As a result, the button 20B is operable while the front cover 10 remains in an attached state. The button 20B is used, for example, for turning the power source of the main body device on and off, for turning the power supply to a heating unit 207 (see fig. 6) for heating the aerosol source on and off, and for Bluetooth (registered trademark) pairing commands, etc. Moreover, a reset function is performed by a long press (e.g., pressing for 5 seconds or more) of the button 20B while the front cover 10 is removed from the main body device 20. BLE (= Bluetooth low energy) is used as Bluetooth, for example.

Magnets 20C used for attaching the front cover 10 are disposed on the upper portion and lower portion of the front face of the main body device 20. The magnets 20C are provided at positions facing magnets 10C provided on the inner side of the front cover 10. The magnets 20C on the main body device 20 and the magnets 10C on the front cover 10 have attracting polarities. When the magnets 10C on the front cover 10 are N poles, the magnets 20C on the main body device 20 side are S poles, for example. The front cover 10 is detachably attached to the main body device 20 by the force of attraction of the magnets. It should be noted that either the magnets 10C or the magnets 20C may be metal pieces made of iron or another magnetic metal. Attachment of the front cover 10 to the main body device 20 is detected by means of the Hall IC provided on the main body device 20 side.

Various other types of electronic components required for generating an aerosol are built into the main body device 20. In this sense, the main body device 20 is an example of an electronic device specifically for generating an aerosol. Moreover, in a narrow sense the main body device 20 is referred to as an aerosol generating device.

### <Internal Configuration>

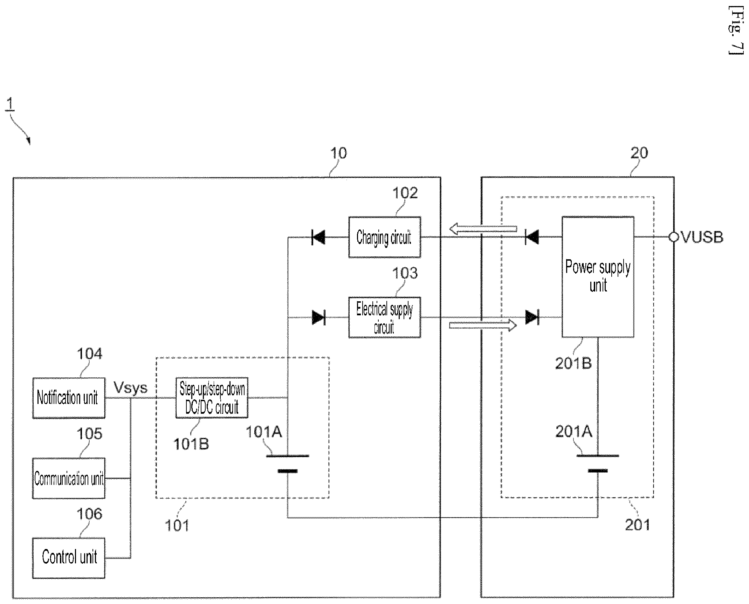

Fig. 6 is a diagram schematically showing an internal configuration of the aerosol generating device 1. Fig. 7 is a diagram schematically showing connection relationships of a power source system circuit in the front cover 10 and the main body device 20. It should be noted that fig. 6 shows a state in which the stick-type substrate 210 is fitted to the main body device 20. Furthermore, the internal configuration shown in fig. 6 is intended to illustrate the components provided in the front cover 10 and the main body device 20 and positional relationships thereof. For this reason, the external appearance of the components, etc. shown in fig. 6 does not always match the external appearance diagrams described above.

The front cover 10 is provided with: the power source unit 101 for storing electricity; the charging circuit 102 for charging the power source unit 101 using power supplied from the main body device 20 side; the electrical supply circuit 103 for supplying the main body device 20, etc. with power from the power source unit 101; the notification unit 104 for notifying information; a communication unit 105; and a control unit 106.

The power source unit 101 is realized by means of a secondary battery 101A and is further provided with a step-up/step-down DC/DC circuit 101B. A lithium ion secondary battery is used as the secondary battery 101A, for example. In the power source unit 101, the step-up/step-down DC/DC circuit 101B generates a 3.3 V power source Vsys from an output voltage of the secondary battery 101A, and supplies this to the notification unit 104, the communication unit 105, and the control unit 106.

The charging circuit 102 is configured by a step-up DC/DC circuit, for example. The charging circuit 102 is a circuit for supplying a voltage of 4.2 V, for example, to the secondary battery 101A when the charging circuit 102 is supplied with power from the main body device 20. Moreover, the charging circuit 102 is provided with a circuit for preventing a reverse current.

The electrical supply circuit 103 is configured by a step-up DC/DC circuit, for example. The electrical supply circuit 103 is a circuit for supplying a constant voltage (e.g., 5 V) to the main body device 20, regardless of the output voltage of the power source unit 101. Moreover, the electrical supply circuit 103 is provided with a circuit for preventing a reverse current.

Power supply from the main body device 20 to the charging circuit 102 and power supply from the electrical supply circuit 103 to the main body device 20 may be either contact power supply or contactless power supply. Examples of contact power supply methods which may be used include a method using the mechanical contact of electrodes, a method using the mechanical contact of spring-loaded electrode pins (pogo pins), and a method using connector coupling. Contactless power supply may employ power supply based on electromagnetic induction systems, such as the Qi standard and the NFC (= near field communication) standard, and power supply based on electric field induction systems.

The notification unit 104 is a display device for notifying various types of information by displaying text or images. The notification unit 104 is realized, for example, by means of a liquid crystal display, an organic EL (= electroluminescence) display, a micro LED (= light-emitting diode), or other display device. The notification unit 104 displays information such as residual power in the built-in secondary battery, current operating mode of the main body device 20 (large-amount-of-aerosol generating mode, small-amount-of-aerosol generating mode), an aerosol inhalation history, time of day, and error information, for example. Furthermore, the notification unit 104 displays various types of information acquired by communication with another external device, for example. Note that the notification unit 104 is an example of a display unit.

The communication unit 105 is a communication interface for performing communication between the main body device 20 and another device. The communication unit 105 acquires status information from the main body device 20 and sends this status information to the notification unit 104. Furthermore, the communication unit 105 connects with other devices by means of control performed by the control unit 106, and acquires information to send to the notification unit 104. The communication unit 105 communicates with other devices by means of a system based on any wired or wireless communication standard. Examples of communication standards include wireless LAN (= local area network), serial signal line, Wi-Fi (registered trademark), and Bluetooth, etc.

The control unit 106 is a device for performing various types of arithmetic processing and control in relation to the front cover 10 by reading and executing programs. The control unit 106 is realized by means of an electronic circuit such as a central processing unit (= CPU), a microprocessing unit (= MPU), a graphical processing unit (= GPU), an application-specific integrated circuit (= ASIC), a field programmable gate array (= FPGA), or a digital signal processor (= DSP). The control unit 106 may also include a read only memory (= ROM) for storing programs and computation parameters, etc., and a random access memory (= RAM) for temporarily storing suitably changing parameters, etc.

The control unit 106 controls, for example: communication with the main body device 20, communication with another device such as a smartphone, display provided by the notification unit 104, charging of the secondary battery 101A of the power source unit 101 by means of the charging circuit 102 and the electrical supply circuit 103, and power supply to electronic components, etc. The control unit 106 additionally performs processing, etc. based on input of information to the electronic components on the front cover 10 and information output from the electronic components. Charging from a USB cable is feasible for charging of the secondary battery 101A. Charging from the secondary battery 201A in the main body device 20 could also be possible.

For control in the front cover 10, internal communication between the control unit 106 and the various units employs, for example, a serial communication method such as an inter-integrated circuit (= I2C) communication method, a serial peripheral interface (= SPI) communication method, or a universal asynchronous receiver transmitter (= UART) communication method. An SPI communication method or a UART communication method is used for communication between the control unit 106 and the main body device 20.

The main body device 20 is provided with: a power source unit 201, a sensor unit 202, a notification unit 203, a memory unit 204, a communication unit 205, a control unit 206, a heating unit 207, a heat insulating portion 208, and a holding portion 209. Fig. 6 shows a state in which the stick-type substrate 210 is held in the holding portion 209, and the user inhales the aerosol in this state.

The power source unit 201 is a unit for supplying power to the front cover 10 and the main body device 20. The power source unit 201 stores power using a lithium-ion secondary battery or a capacitor, for example. The example shown in fig. 7 is configured so that power is stored in the secondary battery 201A. The secondary battery 201A is chargeable from an external power source. A mains power source, a mobile battery, and the secondary battery 101A on the front cover 10, etc. may be used as the external power source, for example.

Furthermore, the power source unit 201 is provided with a power supply unit 201B. The power supply unit 201B switches the supply path of power and converts voltage levels, depending on the operation mode. The power supply unit 201B outputs e.g., 3.3 V to the power source line to which are connected the sensor unit 202, the notification unit 203, the memory unit 204, the communication unit 205, and the control unit 206. Furthermore, the power supply unit 201B outputs e.g., 4.2 V to the power source line to which the heating unit 207 is connected. When the secondary battery 201A is charged by an external power source, the power supply unit 201B outputs e.g., 4.2 V to the power source line to which the secondary battery 201A is connected. A USB cable is used for supplying electricity from a mains power source or a mobile battery serving as an external power source. An electrical supply terminal corresponding to these external power sources is denoted by "VUSB" in fig. 7.

The sensor unit 202 is an electronic component for detecting various types of information relating to the main body device 20. Sensors constituting the sensor unit 202 include a pressure sensor such as a microphone capacitor, and a flow rate sensor, for example. The sensor unit 202 outputs detected information to the control unit 206. For example, when a change in air pressure or a flow of air accompanying inhalation has been detected, the sensor unit 202 outputs a numerical value representing inhalation by the user to the control unit 206.

The sensor unit 202 has an input device for receiving user input, for example. The input device is realized by means of a button or a switch, for example. The button 20B shown in fig. 4 is an example of an input device. The button 20B is used for switching a main power source on and off, and for switching starting and stopping of electrical supply to the heating unit 207 (in other words, starting and stopping of aerosol generation), etc. The content of user commands is output from the sensor unit 202 to the control unit 206.

The sensor unit 202 additionally has a temperature sensor for detecting the temperature of the heating unit 207. The temperature sensor detects the temperature of the heating unit 207 on the basis of an electrical resistance value of a conductive track of the heating unit 207, for example. The detected electrical resistance value is output from the sensor unit 202 to the control unit 206. It should be noted that the control unit 206 calculates the temperature of the heating unit 207 on the basis of the electrical resistance value. In other words, the control unit 206 calculates the temperature of the stick-type substrate 210 which is held in the holding portion 209.

The notification unit 203 is an electronic component for notifying the user of various types of information relating to the main body device 20. The notification unit 203 may be configured, for example, by a light-emitting device such as an LED (= light-emitting diode), a display device for displaying images, a sound output device for outputting sounds, or a vibration device for causing the main body device 20 to vibrate, etc. The notification unit 203 may also notify the user of a state in which the aerosol can be inhaled. This notification is made when the temperature of the stick-type substrate 210 heated by means of the heating unit 207 has reached a predetermined temperature.

The memory unit 204 stores various types of information relating to operation of the main body device 20. The memory unit 204 is configured by a non-volatile storage medium such as a flash memory, for example. Information stored in the memory unit 204 includes an operating system (= OS) and firmware (= FW), and other programs, for example. Furthermore, the information stored in the memory unit 204 includes information relating to control of electronic components, for example. The information relating to control includes, for example, information relating to inhalation by the user, such as number of inhalations, times of inhalation, and cumulative inhalation time.

The communication unit 205 is a communication interface for implementing communication between the main body device 20 and another device. The communication unit 205 communicates with other devices by means of a system based on any wired or wireless communication standard. Examples of communication standards include wireless LAN, serial signal line, Wi-Fi, and Bluetooth, etc. For example, the communication unit 205 sends the information relating to user inhalation to a smartphone. Furthermore, the communication unit 205 downloads, from a server, update programs and profiles stipulating changes in temperature of the heating unit 207 in a heating mode. Furthermore, the communication unit 205 sends, to the electrical supply circuit 103, commands for starting and stopping power supply.

The control unit 206 functions as an arithmetic processing device and a control device, controlling operations of the main body device 20 in accordance with various programs. Furthermore, the control unit 206 may control operations of the charging circuit 102 and the electrical supply circuit 103 provided on the front cover 10. Control signals are sent through signal lines different from the power source line. For example, communication inside the main body device 20 employs a serial communication method such as an I2C communication method, an SPI communication method, or a UART communication method. An SPI communication method or a UART communication method is used for communication between the control unit 206 and the charging circuit 102 and electrical supply circuit 103 on the front cover 10. It should be noted that BLE is used for a communication line, for example. The control unit 206 is realized by means of an electronic circuit such as a CPU, MPU, GPU, ASIC, FPGA, or DSP, etc., for example. The control unit 206 may also include a ROM for storing programs and computation parameters, etc., and a RAM for temporarily storing parameters, etc.

The control unit 206 executes various types of processing and control by executing programs. Specifically, the control unit 206 implements: supply of electricity from the power source unit 201 to other electronic components; charging of the power source unit 201; detection of information by the sensor unit 202; notification of information by the notification unit 203; storage and reading of information by the memory unit 204; and sending/receiving of information by the communication unit 205, etc. It should be noted that communication by the communication unit 205 also includes communication with the front cover 10. The control unit 206 additionally controls processing, etc. based on input of information to the electronic components and information output from the electronic components.

The holding portion 209 is a substantially cylindrical container. A space inside the holding portion 209 defined by an inner wall and a bottom face of the container will be referred to as an internal space 209A. The internal space 209A is substantially columnar. An opening 209B allowing the internal space 209A to communicate with the exterior is provided in the holding portion 209. The stick-type substrate 210 is inserted into the internal space 209A from the opening 209B. The stick-type substrate 210 is inserted until a tip end thereof touches a bottom portion 209C. The stick-type substrate 210 is only partially accommodated in the internal space 209A. A state in which the stick-type substrate 210 is accommodated in the internal space 209A will be referred to as the stick-type substrate 210 being held in the internal space 209A.

The inner diameter of at least part of the holding portion 209 in an axial direction thereof is formed so as to be smaller than the outer diameter of the stick-type substrate 210. An outer circumferential surface of the stick-type substrate 210 inserted into the internal space 209A is therefore subjected to pressure from the inner wall of the holding portion 209. The stick-type substrate 210 is held in the internal space 209A by means of this pressure. Furthermore, the holding portion 209 also has a function for defining a flow path for air passing through the stick-type substrate 210. An air inflow hole which is an inlet for air into the flow path is disposed in the bottom portion 209C, for example. Moreover, the opening 209B serves as an air outflow hole which is an outlet for the air.

The holding portion 209 holds a portion of the stick-type substrate 210, with the remaining part of the stick-type substrate 210 protruding outside from a casing of the main body device 20. The part which is held in the holding portion 209 will be referred to below as a substrate portion 210A, and the part protruding from the enclosure will be referred to below as a mouthpiece portion 210B. The aerosol source is accommodated in at least the substrate portion 210A. The aerosol source is a substance which is atomized by heating so as to generate an aerosol. Other than shredded tobacco, the aerosol source contains a processed product obtained by molding a tobacco raw material into a granular form, a sheet form or a powder form, or another tobacco-derived substance. In addition, the aerosol source may also contain a non-tobacco-derived substance produced from a plant other than tobacco, such as mint or herb. The aerosol source may contain a flavoring component such as menthol, for example. When the main body device 20 is a medical inhaler, the aerosol source may contain a drug to be inhaled by a patient. It should be noted that the aerosol source is not limited to a solid, and may equally be a polyhydric alcohol such as glycerol or propylene glycol, or may be a liquid such as water, for example.

At least part of the mouthpiece portion 210B is held in the user's mouth during inhalation. When the user inhales with the mouthpiece portion 210B held in the mouth, air flows into the internal space 209A from the air inflow hole. The air which has flowed in reaches the user's mouth after passing through the internal space 209A and the substrate portion 210A. The air reaching the user's mouth contains the aerosol generated by the substrate portion 210A.

The heating unit 207 is formed by a heater or other heat-generating element. The heating unit 207 is formed by any material such as a metal or polyimide. The heating unit 207 is constructed in the form of a film, for example, and fitted to the outer circumferential surface of the holding portion 209. The aerosol source contained in the stick-type substrate 210 is heated and atomized by the heat generated by the heating unit 207. The atomized aerosol source is mixed with air, etc., and an aerosol is generated. In the example shown in fig. 6, it is assumed that the outer circumferential region of the stick-type substrate 210 is initially heated, with the range of heating steadily moving toward the center.

Atomization of the aerosol source therefore starts from the outer circumferential region of the stick-type substrate 210 and steadily moves toward the center. The heating unit 207 generates heat by means of electrical supply from the power source unit 201. Electrical supply to the heating unit 207 is permitted when predetermined user input is detected via the sensor unit 202, for example. The user input as referred to here includes operation of the shutter 30 (see fig. 1) and/or of the button 20B (see fig. 4). However, electricity is supplied to the heating unit 207 on the assumption that the front cover 10 (see fig. 1) is attached to the main body device 20. By attaching the front cover 10, the temperature transmitted to the user's hand can be reduced as compared to when the front cover 10 is not attached.

Inhalation by the user becomes possible when the temperature of the stick-type substrate 210 heated by means of the heating unit 207 reaches a predetermined temperature. Inhalation of the aerosol by the user is detected by means of the flow rate sensor, etc. in the sensor unit 202, and information relating to detected inhalation is saved in the memory unit 204. Electrical supply to the heating unit 207 is stopped when predetermined user input is subsequently detected by the sensor unit 202. It should be noted that it is also possible to adopt a method in which electricity is supplied to the heating unit 207 during a period in which inhalation by the user is detected by the sensor unit 202, and electrical supply to the heating unit 207 is stopped when inhalation by the user is no longer detected by the sensor unit 202.

Furthermore, in the example of fig. 6, the heating unit 207 is disposed outside the stick-type substrate 210, but it is equally possible for the heating unit 207 to be a blade-like metal piece which is inserted into the stick-type substrate 210 for use, or for the heating unit 207 to be a metal piece built into the stick-type substrate 210. When a metal piece acting as the heating unit 207 is built into the stick-type substrate 210, an induction heating coil should be arranged around the holding portion 209.

The heat insulating portion 208 is a member for reducing propagation of heat generated by the heating unit 207 to the surrounding area. The heat insulating portion 208 is therefore disposed so as to cover at least the outer circumferential surface of the heating unit 207. For example, the heat insulating portion 208 is configured by a vacuum insulating material or an aerogel insulating material, etc. A vacuum insulating material is a heat insulating material in which a state of high vacuum is created by wrapping glass wool and silica (silicon powder), etc. in a resin film, for example, so that heat conduction by gas is as close as possible to zero.

### <Operation of Aerosol Generating Device 1 (Operation Before Heating)>

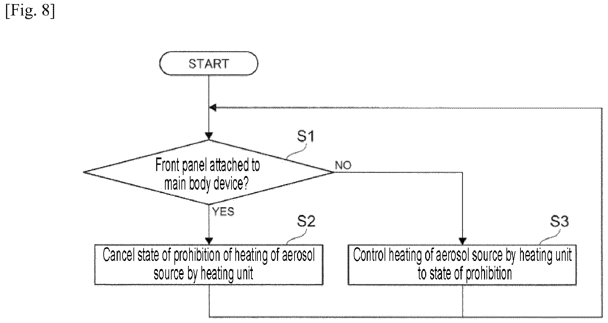

Fig. 8 is a flowchart illustrating an example of an operation before heating performed by the control unit 206 in the main body device 20 of the aerosol generating device 1. The operation before heating is an operation which is implemented before the start of heating by the heating unit 207 (see fig. 6), and is constantly implemented in the background.

The control unit 206 first of all determines whether or not the front cover 10 (see fig. 1) is attached to the main body device 20 (see fig. 1). Attachment/detachment of the front cover 10 is determined on the basis of an output signal from the Hall IC. When the front cover 10 is attached to the main body device 20 (YES in S1), the control unit 206 cancels the state of prohibition of heating of the aerosol source by the heating unit 207 (S2). Meanwhile, in a state in which the front cover 10 is not attached to the main body device 20 (NO in S1), the control unit 206 maintains the state of prohibition of heating of the aerosol source by the heating unit 207 (S3). Heating of the stick-type substrate 210 (see fig. 6) constituting the aerosol source is started by operation of the button 20B (see fig. 4) once the state of prohibition of heating has been canceled as a result of the front cover 10 being attached. The button 20B is operated by a long press of 1 second or greater of the button 20B from above the front cover 10.

### <Operation of Aerosol Generating Device 1 (Reporting of Smoking Area Location Information)>

Reporting of smoking area location information by the aerosol generating device 1 will be described below. The aerosol generating device 1 reports location information of other smoking areas where other smokers, who were together at a given smoking area, are smoking.

The aerosol generating device 1 first of all acquires and stores information of another aerosol generating device 1 that has been present for more than a predetermined time within a predetermined distance.

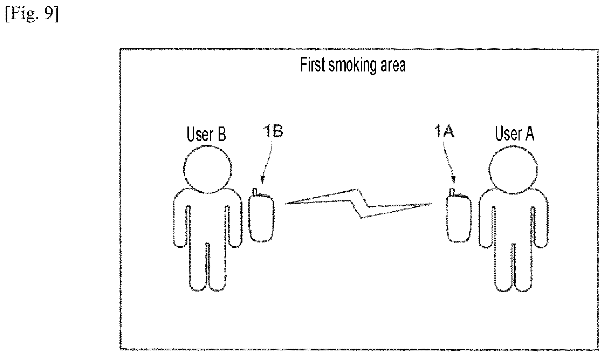

Fig. 9 is a diagram illustrating a situation in which information of an aerosol generating device 1 of another smoker who was smoking together in a first smoking area is acquired and stored. It will be assumed that a user A and a user B were smoking together in the first smoking area, as shown in the drawing. An aerosol generating device 1A in the possession of the user A acquires and stores information of an aerosol generating device 1B in the possession of the user B. Here, the user A is assumed to be a user observing correct smoking etiquette by switching the power source of the aerosol generating device 1 ON only in smoking areas. Accordingly, the user B also presumably observes correct smoking etiquette by smoking in smoking areas. It should be noted that when there are other users who have also been present within a predetermined distance from the user A for more than a predetermined time, the aerosol generating device 1 also acquires and stores information of the aerosol generating devices 1 in the possession of those users.

The aerosol generating device 1 then acquires a notification that the other aerosol generating device 1 has performed heating, and crosschecks this notification with information of other aerosol generating devices 1 which was previously stored. Specifically, the aerosol generating device 1 acquires a notification that the other aerosol generating device 1 has performed heating, and determines whether or not the information of the other aerosol generating devices 1 which was previously stored contains the information of the other aerosol generating device 1 pertaining to the acquired notification.

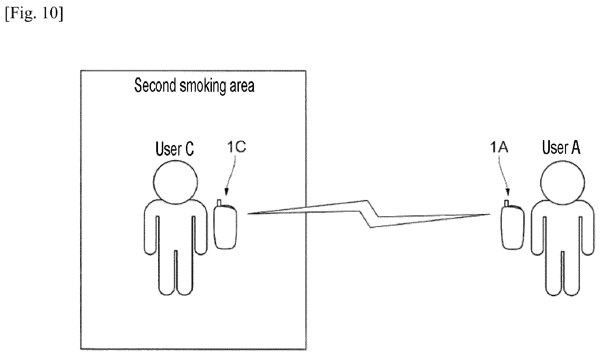

Fig. 10 is a diagram illustrating a situation in which a notification from an aerosol generating device 1 of another smoker who is smoking in a second smoking area is acquired and crosschecked. It will be assumed that a user C was smoking in a second smoking area, as shown in the drawing. The aerosol generating device 1A in the possession of the user A acquires a notification from an aerosol generating device 1C in the possession of the user C. The aerosol generating device 1A then crosschecks information of the aerosol generating device 1C pertaining to the acquired notification with information of the other aerosol generating device 1 stored in fig. 9.

If, as a result of the crosschecking, the information of the other aerosol generating device 1 which was previously stored is found to contain the information of the other aerosol generating device 1 pertaining to the acquired notification, the aerosol generating device 1 reports the location information of the other aerosol generating device 1 pertaining to the acquired notification.

For example, if the aerosol generating device 1 has a display unit such as a liquid crystal display, the aerosol generating device 1 displays, on the display unit, the location information of the other aerosol generating device 1 pertaining to the acquired notification. Here, the information of the other aerosol generating device 1 which was previously stored constitutes information of another aerosol generating device 1 in the possession of a user observing correct smoking etiquette by smoking in smoking areas, so the location information of the other aerosol generating device 1 pertaining to the acquired notification is presumed to be location information of a smoking area.

It should be noted that a condition of the aerosol generating device 1 having acquired a notification that multiple other aerosol generating devices 1 have performed heating may be added to the condition for reporting the location information of the other aerosol generating device 1 pertaining to the acquired notification. By reporting a place where two or more other people were smoking as a smoking area, this improves the credibility of that place being a smoking area. However, with this information alone, if three or more people are smoking in a residence, for example, there is a possibility that the residence will be registered as a smoking area. For this reason, the aerosol generating device 1 may be provided with a function for displaying "Register this place as a smoking area?" on the liquid crystal display on the front cover 10, for example, so that the user can confirm the place as a smoking area.

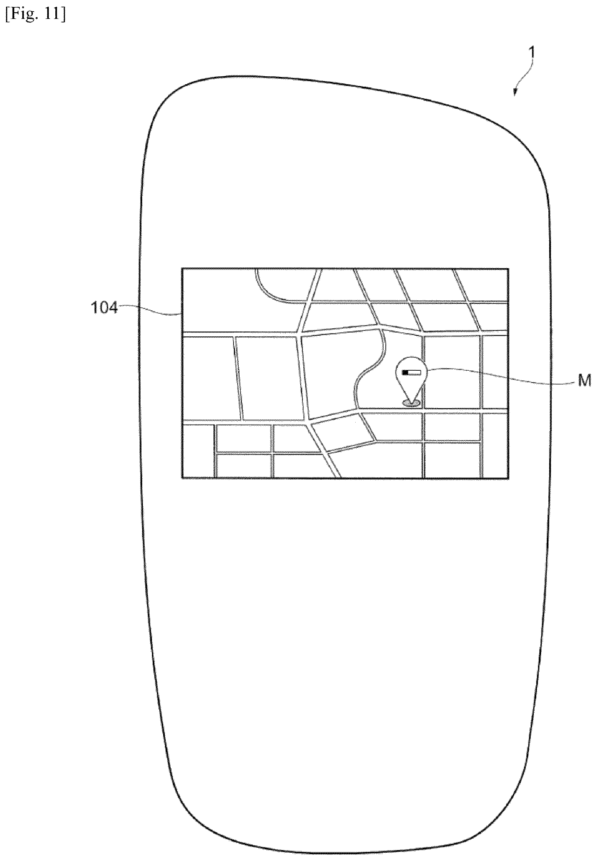

Fig. 11 shows an example of display of location information of a smoking area provided by the aerosol generating device 1. In the example shown in fig. 11, the aerosol generating device 1 is displaying location information of a smoking area on the notification unit 104. As the location information in the example shown in fig. 11, a map is displayed on the notification unit 104, and a mark M representing a smoking area is provided at a location on the map corresponding to the smoking area.

Alternatively, the aerosol generating device 1 may output location information of the smoking area to an external device. The external device is a cell phone, for example. In this case, the location information of the smoking area should be displayed on a display unit such as a liquid crystal display of the external device.

Three operating examples of the aerosol generating device 1 reporting location information of smoking areas will be described below. In the first operating example, all of the main processing to report the location information of a smoking area is implemented by the front cover 10. In the second operating example, all of the main processing to report the location information of a smoking area is implemented by the main body device 20. In the third operating example, the main processing to report the location information of a smoking area is divided between the front cover 10 and the main body device 20.

### <First Operating Example of Reporting Location Information of Smoking Area>

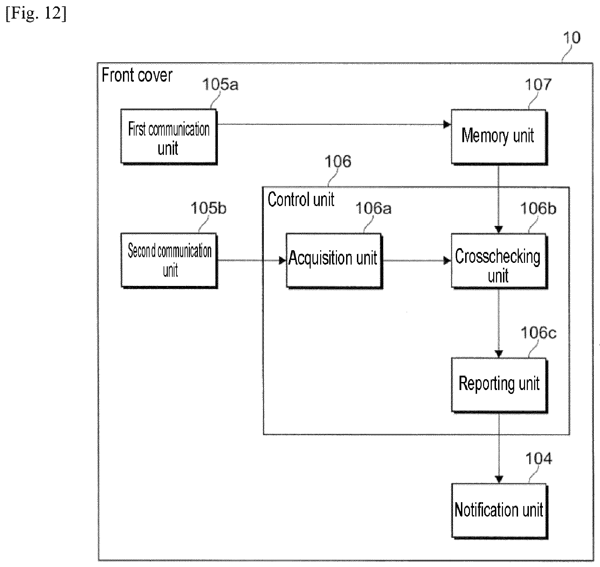

Fig. 12 is a block diagram of the front cover 10 for realizing the first operating example. As shown in the drawing, the front cover 10 comprises: a first communication unit 105a, a second communication unit 105b, a memory unit 107, a control unit 106, and a notification unit 104.

The first communication unit 105a is a communication interface for performing communication with another device by a short-range wireless communication method enabling communication over a shorter distance than the short-range wireless communication method used by the second communication unit 105b of the communication unit 105 shown in fig. 6. If we assume that the second communication unit 105b uses classic Bluetooth, which enables communication over a distance of around 1 m-100 m, as the short-range wireless communication method, then the first communication unit 105a should use BLE, which enables communication over a distance of around several centimeters to several meters, as the short-range wireless communication method, for example. The first communication unit 105a detects another front cover 10 which has been present for more than a predetermined time within a predetermined area. The predetermined distance should be 5 m, for example, and the predetermined time should be 5 minutes, for example. The first communication unit 105a is an example of a first communication unit which performs communication by a short-range wireless communication method.

The second communication unit 105b is a communication interface for performing communication with another device by a short-range wireless communication method enabling communication over a longer distance than the short-range wireless communication method used by the first communication unit 105a of the communication unit 105 shown in fig. 6. If we assume that the first communication unit 105a uses BLE, which enables communication over a distance of around several centimeters to several meters, as the short-range wireless communication method, then the second communication unit 105b should use classic Bluetooth, which enables communication over a distance of around 1 m-100 m, as the short-range wireless communication method, for example. The second communication unit 105b detects that a main body device 20 to which another front cover 10 is attached has performed heating. The second communication unit 105b is an example of a second communication unit which performs communication by a wireless communication method that also enables communication over a longer distance than the communication distance of the first communication unit.

Here, the first communication unit 105a is assumed to perform communication by a short-range wireless communication method enabling communication over a short distance, while the second communication unit 105b is assumed to perform communication by a short-range wireless communication method enabling communication over a long distance, but this is not limiting. Either one of the first communication unit 105a and the second communication unit 105b may also perform communication using both a short-range wireless communication method enabling communication over a short distance and a short-range wireless communication method enabling communication over a long distance.

It should be noted that the front cover 10 also comprises a third communication unit, which is a communication interface in the communication unit 105 shown in fig. 6 for performing communication with the main body device 20, but this is not shown in the drawings.

The memory unit 107 was described in summary with reference to fig. 6, but here it has a further function of storing information of another front cover 10 (referred to below as a "first other cover") which has been present for more than a predetermined time within a predetermined distance. Information of the first other cover is detected by means of the first communication unit 105a. The memory unit 107 is an example of a memory unit for storing information of the first other cover, which is another cover that has been present for more than a predetermined time within a predetermined distance, the information being detected via the first communication unit. Alternatively, the memory unit 107 may additionally store a notification, which was acquired by an acquisition unit 106a as will be described below, that a main body device 20 to which another front cover 10 is attached has performed heating.

The control unit 106 was described in summary with reference to fig. 6, but the internal configuration of the control unit 106 is also shown here. As shown in the drawing, the control unit 106 comprises: an acquisition unit 106a, a crosschecking unit 106b, and a reporting unit 106c.

The acquisition unit 106a acquires, from the second communication unit 105b, a notification that a main body device 20 to which another front cover 10 is attached has performed heating. The notification includes location information of the other front cover 10. The location information of the other front cover 10 should be obtained by means of a GPS (global positioning system) ranging function of the other front cover 10 or the main body device 20 to which the other front cover 10 is attached. It should be noted that the acquisition unit 106a is assumed here to acquire the location information of the other front cover 10 from the notification that a main body device 20 to which the other front cover 10 is attached has performed heating, but this is not limiting. For example, the acquisition unit 106a may acquire, from location information which is constantly being received, the location information received at the time of acquisition of the notification that a main body device 20 to which the other front cover 10 is attached has performed heating. The acquisition unit 106a is an example of an acquisition unit for acquiring, via the second communication unit, a notification that the main body to which the other cover is attached has performed heating.

The crosschecking unit 106b crosschecks information of another front cover 10 (referred to below as a "second other cover") based on the notification acquired by the acquisition unit 106a, with the information of the first other cover stored in the memory unit 107. Specifically, the crosschecking unit 106b determines whether or not the information of the first other cover stored in the memory unit 107 contains the information of the second other cover based on the notification acquired by the acquisition unit 106a. Here, the information of the first other cover should contain identification information of the first other cover, and the information of the second other cover should contain identification information of the second other cover. The crosschecking unit 106b should then determine whether or not the identification information of the second other cover acquired by the acquisition unit 106a is in the identification information of the first other cover stored in the memory unit 107.

When the information of the first other cover stored in the memory unit 107 contains the information of the second other cover based on the notification acquired by the acquisition unit 106a, the reporting unit 106c causes the notification unit 104 to display the location information of the second other cover. Alternatively, when the information of the first other cover stored in the memory unit 107 contains the information of the second other cover based on the notification acquired by the acquisition unit 106a, the reporting unit 106c may output location information of the second other cover to the first communication unit 105a or the second communication unit 105b. By this means, the first communication unit 105a or the second communication unit 105b sends the location information of the second other cover to an external device (a smartphone, etc.). Alternatively, the first communication unit 105a or the second communication unit 105b may send the location information of the second other cover to another aerosol generating device 1 by means of a P2P connection using BLE or classic Bluetooth. The reporting unit 106c is an example of a reporting unit which, when the information of the first other cover stored in the memory unit contains information of a second other cover, which is another cover, based on the notification acquired by the acquisition unit, either outputs location information of said second other cover via the first communication unit or the second communication unit, or causes a display unit to display said location information of the second other cover.

The notification unit 104 was described with reference to fig. 6 and will therefore not be described again.

It should be noted that the front cover 10 also comprises the power source unit 101, the charging circuit 102, and the electrical supply circuit 103, as shown in fig. 6, but these are not shown in the drawing.

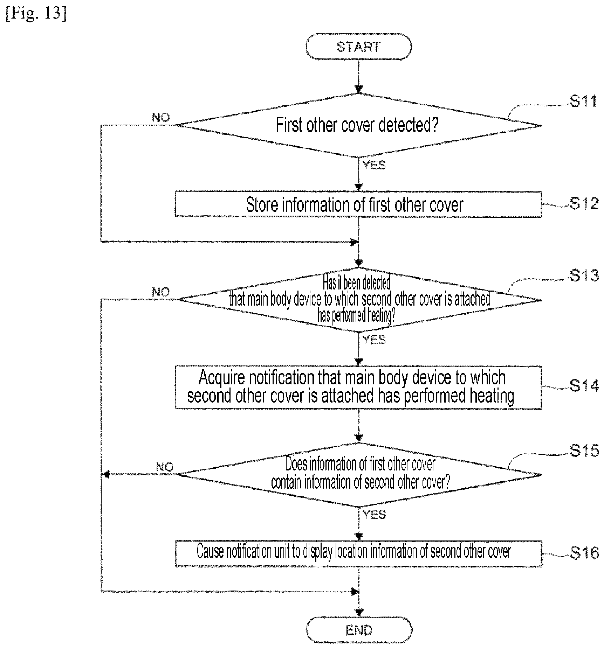

Fig. 13 is a flowchart illustrating the first operating example. The front cover 10 is assumed to implement the first operating example periodically.

As shown in the drawing, in the front cover 10, the first communication unit 105a first of all determines whether or not a first other cover was detected (step 11).

If a first other cover was detected in step 11, the first communication unit 105a stores the information of the first other cover in the memory unit 107 (step 12), and the processing advances to step 13.

If a first other cover was not detected in step 11, the front cover 10 advances the processing to step 13 without implementing step 12.

Next, the second communication unit 105b determines whether or not it has been detected that a main body device 20 to which a second other cover is attached has performed heating (step 13).

If it was detected in step 13 that a main body device 20 to which a second other cover is attached has performed heating, the acquisition unit 106a acquires from the second communication unit 105b a notification that the main body device 20 to which the second other cover is attached has performed heating (step 14). The crosschecking unit 106b then determines whether or not the information of the first other cover stored in the memory unit 107 in step 12 contains the information of the second other cover pertaining to the notification acquired in step 14 (step 15). If the information of the first other cover contains the information of the second other cover, the reporting unit 106c causes the notification unit 104 to display the location information of the second other cover (step 16). Alternatively, in this case, the reporting unit 106c may output the location information of the second other cover to the first communication unit 105a or the second communication unit 105b for display on an external device.

If it was not detected in step 13 that the main body device 20 to which the second other cover is attached has performed heating, the front cover 10 terminates the processing without implementing steps 14-16.

If the information of the first other cover did not contain the information of the second other cover in step 15, the front cover 10 terminates the processing without implementing step 16.

The first communication unit, second communication unit, memory unit, acquisition unit, and reporting unit are all provided on the front cover 10 in the first operating example, as described above. This makes it possible to simplify the structure of the main body device 20, as compared to a case in which the first communication unit, second communication unit, memory unit, acquisition unit, and reporting unit are all provided in the main body device 20.

### <Second Operating Example of Reporting Location Information of Smoking Area>

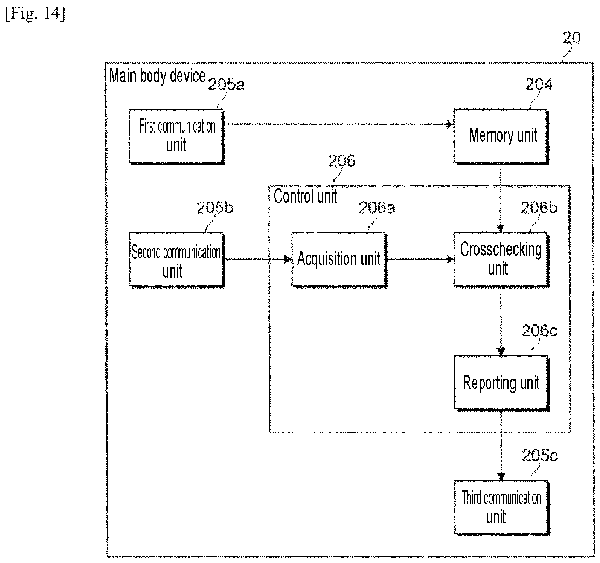

Fig. 14 is a block diagram of the main body device 20 for realizing the second operating example. As shown in the drawing, the main body device 20 comprises: a first communication unit 205a, a second communication unit 205b, a third communication unit 205c, a memory unit 204, and a control unit 206.

The first communication unit 205a is a communication interface for performing communication with another device by a short-range wireless communication method enabling communication over a shorter distance than the short-range wireless communication method used by the second communication unit 205b of the communication unit 205 shown in fig. 6. If we assume that the second communication unit 205b uses classic Bluetooth, which enables communication over a distance of around 1 m-100 m, as the short-range wireless communication method, then the first communication unit 205a should use BLE, which enables communication over a distance of around several centimeters to several meters, as the short-range wireless communication method, for example. The first communication unit 205a detects another aerosol generating device 1 that has been present for more than a predetermined time within a predetermined distance. The predetermined distance should be 5 m, for example, and the predetermined time should be 5 minutes, for example. The first communication unit 205a is an example of a first communication unit which performs communication by a short-range wireless communication method.

The second communication unit 205b is a communication interface for performing communication with another device by a short-range wireless communication method enabling communication over a longer distance than the short-range wireless communication method used by the first communication unit 205a of the communication unit 205 shown in fig. 6. If we assume that the first communication unit 205a uses BLE, which enables communication over a distance of around several centimeters to several meters, as the short-range wireless communication method, then the second communication unit 205b should use classic Bluetooth, which enables communication over a distance of around 1 m-100 m, as the short-range wireless communication method, for example. The second communication unit 205b detects that the other aerosol generating device 1 has performed heating. The second communication unit 205b is an example of a second communication unit which performs communication by a wireless communication method that also enables communication over a longer distance than the communication distance of the first communication unit.

Here, the first communication unit 205a is assumed to perform communication by a short-range wireless communication method enabling communication over a short distance, while the second communication unit 205b is assumed to perform communication by a short-range wireless communication method enabling communication over a long distance, but this is not limiting. Either one of the first communication unit 205a and the second communication unit 205b may also perform communication using both a short-range wireless communication method enabling communication over a short distance and a short-range wireless communication method enabling communication over a long distance.

The third communication unit 205c is a communication interface in the communication unit 205 shown in fig. 6 for performing communication with the front cover 10.

The memory unit 204 was described in summary with reference to fig. 6, but here it has a further function of storing information of another aerosol generating device 1 (referred to below as a "first other device") which has been present for more than a predetermined time within a predetermined distance. Information of the first other device is detected by means of the first communication unit 205a. The memory unit 107 is an example of a memory unit for storing information of the first other device, which is another generating device that has been present for more than a predetermined time within a predetermined distance, the information being detected via the first communication unit. Alternatively, the memory unit 204 may additionally store a notification, which was acquired by an acquisition unit 206a as will be described below, that the other aerosol generating device 1 has performed heating.

The control unit 206 was described in summary with reference to fig. 6, but the internal configuration of the control unit 206 is also shown here. As shown in the drawing, the control unit 206 comprises: an acquisition unit 206a, a crosschecking unit 206b, and a reporting unit 206c.

The acquisition unit 206a acquires, from the second communication unit 205b, a notification that the other aerosol generating device 1 has performed heating. The notification includes location information of the other aerosol generating device 1. The location information of the other aerosol generating device 1 should be obtained by means of a GPS ranging function of the other aerosol generating device 1, for example. It should be noted that the acquisition unit 206a is assumed here to acquire the location information of the other aerosol generating device 1 from the notification that the other aerosol generating device 1 has performed heating, but this is not limiting. For example, the acquisition unit 206a may acquire, from location information which is constantly being received, the location information received at the time of acquisition of the notification that the other aerosol generating device 1 has performed heating. The acquisition unit 206a is an example of an acquisition unit for acquiring, via the second communication unit, a notification that the other aerosol generating device has performed heating.

The crosschecking unit 206b crosschecks information of another aerosol generating device 1 (referred to below as a "second other device") based on the notification acquired by the acquisition unit 206a, with the information of the first other device stored in the memory unit 204. Specifically, the crosschecking unit 206b determines whether or not the information of the first other device stored in the memory unit 204 contains the information of the second other device based on the notification acquired by the acquisition unit 206a. Here, the information of the first other device should contain identification information of the first other device, and the information of the second other device should contain identification information of the second other device. The crosschecking unit 106b then determines whether or not the identification information of the second other device acquired by the acquisition unit 106a is in the identification information of the first other device stored in the memory unit 107.

When the information of the first other device stored in the memory unit 204 contains the information of the second other device based on the notification acquired by the acquisition unit 206a, the reporting unit 206c outputs the location information of the second other device to the third communication unit 205c. By this means, the third communication unit 205c causes the notification unit 104 on the front cover 10 to display the location information of the second other device. Alternatively, when the information of the first other device stored in the memory unit 204 contains the information of the second other device based on the notification acquired by the acquisition unit 206a, the reporting unit 206c may output location information of the second other device to the first communication unit 205a or the second communication unit 205b. By this means, the first communication unit 205a or the second communication unit 205b sends the location information of the second other device to an external device (a smartphone, etc.). Alternatively, the first communication unit 205a or the second communication unit 205b may send the location information of the second other device to the other aerosol generating device 1 by means of a P2P connection using BLE or classic Bluetooth. The reporting unit 206c is an example of a reporting unit which, when the information of the first other device stored in the memory unit contains information of a second other device, which is another generating device, based on the notification acquired by the acquisition unit, either outputs location information of said second other device via the first communication unit or the second communication unit, or causes a display unit to display said location information of the second other device.

It should be noted that the main body device 20 also comprises the power source unit 201 and the sensor unit 202, as shown in fig. 6, but these are not shown in the drawing.

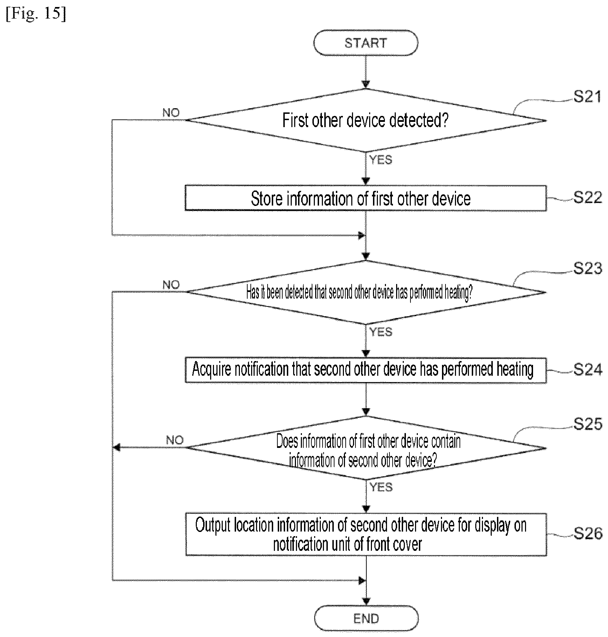

Fig. 15 is a flowchart illustrating the second operating example. The main body device 20 is assumed to implement the second operating example periodically.

As shown in the drawing, in the main body device 20, the first communication unit 205a first of all determines whether or not a first other device was detected (step 21).

If a first other device was detected in step 21, the first communication unit 205a stores the information of the first other device in the memory unit 204 (step 22), and the processing advances to step 23.

If a first other device was not detected in step 21, the main body device 20 advances the processing to step 23 without implementing step 22.

Next, the second communication unit 205b determines whether or not it has been detected that a second other device has performed heating (step 23).

If it was detected in step 23 that a second other device has performed heating, the acquisition unit 206a acquires from the second communication unit 205b a notification that the second other device has performed heating (step 24). The crosschecking unit 206b then determines whether or not the information of the first other device stored in the memory unit 204 in step 22 contains the information of the second other device pertaining to the notification acquired in step 24 (step 25). If the information of the first other device contains the information of the second other device, the reporting unit 206c outputs the location information of the second other device to the third communication unit 205c for display on the notification unit 104 on the front cover 10 (step 26). Alternatively, in this case, the reporting unit 106c may output the location information of the second other device to the first communication unit 105a or the second communication unit 105b for display on an external device.

If it was not detected in step 23 that the second other device has performed heating, the main body device 20 terminates the processing without implementing steps 24-26.

If the information of the first other device did not contain the information of the second other device in step 25, the main body device 20 terminates the processing without implementing step 26.

The first communication unit, second communication unit, memory unit, acquisition unit, and reporting unit are all provided in the main body device 20 in the second operating example, as described above. This makes it possible to simplify the structure of the front cover 10, as compared to a case in which the first communication unit, second communication unit, memory unit, acquisition unit, and reporting unit are all provided on the front cover 10.

### <Third Operating Example of Reporting Location Information of Smoking Area>

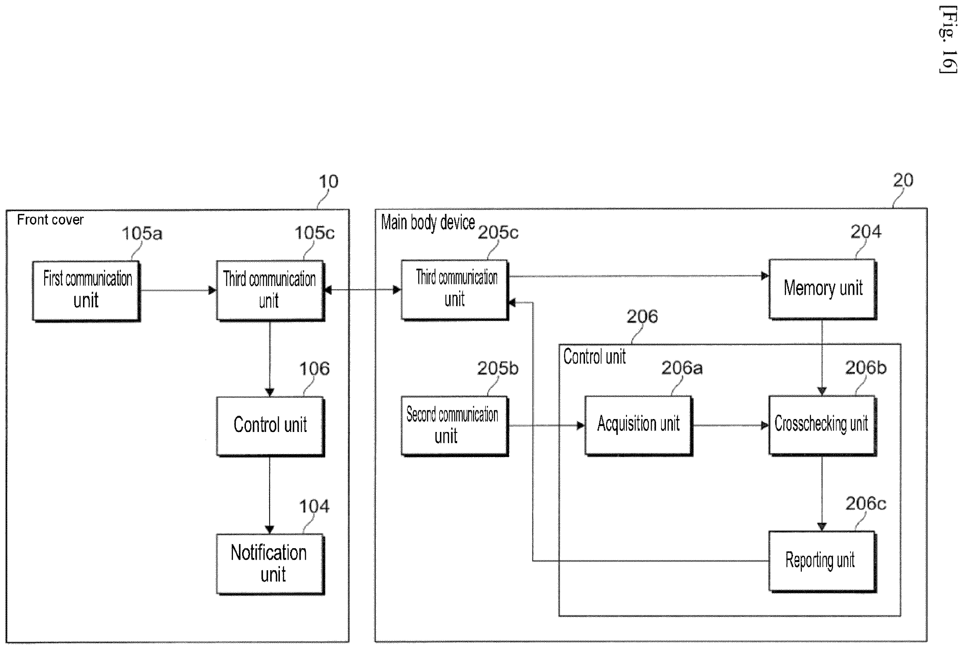

Fig. 16 is a block diagram of a front cover 10 and main device 20 for implementing the third operating example. As shown in the drawing, the front cover 10 comprises: a first communication unit 105a, a third communication unit 105c, a control unit 106, and a notification unit 104. The main body device 20 comprises: a second communication unit 205b, a third communication unit 205c, a memory unit 204, and a control unit 206.

The first communication unit 105a is a communication interface for performing communication with another device by a short-range wireless communication method enabling communication over a shorter distance than the short-range wireless communication method used by the second communication unit 205b of the communication unit 105 shown in fig. 6. If we assume that the second communication unit 205b uses classic Bluetooth, which enables communication over a distance of around 1 m-100 m, as the short-range wireless communication method, then the first communication unit 105a should use BLE, which enables communication over a distance of around several centimeters to several meters, as the short-range wireless communication method, for example. The first communication unit 105a detects another aerosol generating device 1 that has been present for more than a predetermined time within a predetermined distance. The predetermined distance should be 5 m, for example, and the predetermined time should be 5 minutes, for example. The first communication unit 105a is an example of a first communication unit which performs communication by a short-range wireless communication method.

The third communication unit 105c is a communication interface in the communication unit 105 shown in fig. 6 for performing communication with the main body device 20.

The control unit 106 was described in summary with reference to fig. 6, but here it has a further function of reporting location information of a second other device. When the third communication unit 105c has received an instruction from the third communication unit 205c to report location information of a second other device, the control unit 106 causes the notification unit 104 to display location information of the second other device.

The notification unit 104 was described with reference to fig. 6 and will therefore not be described again.

The second communication unit 205b is a communication interface for performing communication with another device by a short-range wireless communication method enabling communication over a longer distance than the short-range wireless communication method used by the first communication unit 105a of the communication unit 205 shown in fig. 6. If we assume that the first communication unit 105a uses BLE, which enables communication over a distance of around several centimeters to several meters, as the short-range wireless communication method, then the second communication unit 205b should use classic Bluetooth, which enables communication over a distance of around 1 m-100 m, as the short-range wireless communication method, for example. The second communication unit 205b detects that the other aerosol generating device 1 has performed heating. The second communication unit 205b is an example of a second communication unit which performs communication by a wireless communication method that also enables communication over a longer distance than the communication distance of the first communication unit.

The third communication unit 205c is a communication interface in the communication unit 205 shown in fig. 6 for performing communication with the front cover 10.

The memory unit 204 was described in summary with reference to fig. 6, but here it has a further function of storing information of another aerosol generating device 1 (first other device) which has been present for more than a predetermined time within a predetermined distance. Information of the first other device is detected by means of the first communication unit 105a and forwarded via the third communication unit 105c and the third communication unit 205c. The memory unit 107 is an example of a memory unit for storing information of the first other device, which is another generating device that has been present for more than a predetermined time within a predetermined distance, the information being detected via the first communication unit. Alternatively, the memory unit 204 may additionally store a notification, which was acquired by an acquisition unit 206a as will be described below, that the other aerosol generating device 1 has performed heating.

The control unit 206 was described in summary with reference to fig. 6, but the internal configuration of the control unit 206 is also shown here. As shown in the drawing, the control unit 206 comprises: the acquisition unit 206a, the crosschecking unit 206b, and the reporting unit 206c.

The acquisition unit 206a acquires, from the second communication unit 205b, a notification that the other aerosol generating device 1 has performed heating. The notification includes location information of the other aerosol generating device 1. The location information of the other aerosol generating device 1 should be obtained by means of a GPS ranging function of the other aerosol generating device 1, for example. It should be noted that the acquisition unit 206a is assumed here to acquire the location information of the other aerosol generating device 1 from the notification that the other aerosol generating device 1 has performed heating, but this is not limiting. For example, the acquisition unit 206a may acquire, from location information which is constantly being received, the location information received at the time of acquisition of the notification that the other aerosol generating device 1 has performed heating. The acquisition unit 206a is an example of an acquisition unit for acquiring, via the second communication unit, a notification that the other aerosol generating device has performed heating.

The crosschecking unit 206b crosschecks information of another aerosol generating device 1 (referred to below as a "second other device") based on the notification acquired by the acquisition unit 206a, with the information of the first other device stored in the memory unit 204. Specifically, the crosschecking unit 206b determines whether or not the information of the first other device stored in the memory unit 204 contains the information of the second other device based on the notification acquired by the acquisition unit 206a. Here, the information of the first other device should contain identification information of the first other device, and the information of the second other device should contain identification information of the second other device. The crosschecking unit 206b then determines whether or not the identification information of the second other device acquired by the acquisition unit 206a is in the identification information of the first other device stored in the memory unit 204.

When the information of the first other device stored in the memory unit 204 contains the information of the second other device based on the notification acquired by the acquisition unit 206a, the reporting unit 206c outputs the location information of the second other device to the front cover 10 via the third communication unit 205c. By this means, the control unit 106 causes the notification unit 104 to display the location information of the second other device, or outputs said location information of the second other device to the first communication unit 105a for display on an external device. Alternatively, when the information of the first other device stored in the memory unit 204 contains the information of the second other device based on the notification acquired by the acquisition unit 206a, the reporting unit 206c may output location information of the second other device to the second communication unit 205b. By this means, the second communication unit 205b sends the location information of the second other device to an external device (a smartphone, etc.). Alternatively, the second communication unit 205b may send the location information of the second other device to the other aerosol generating device 1 by means of a P2P connection using classic Bluetooth. The reporting unit 206c is an example of a reporting unit which, when the information of the first other device stored in the memory unit contains information of a second other device, which is another generating device, based on the notification acquired by the acquisition unit, either outputs location information of said second other device via the first communication unit or the second communication unit, or causes a display unit to display said location information of the second other device.

It should be noted that the front cover 10 also comprises the power source unit 101, the charging circuit 102, and the electrical supply circuit 103, as shown in fig. 6, but these are not shown in the drawing.

Furthermore, the main body device 20 also comprises the power source unit 201 and the sensor unit 202, as shown in fig. 6, but these are not shown in the drawing.

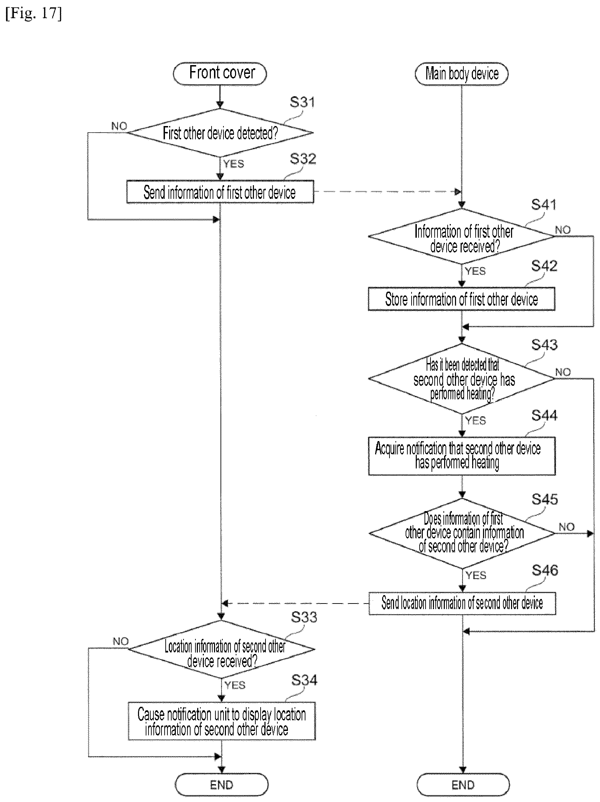

Fig. 17 is a sequence diagram illustrating the third operating example. The front cover 10 and the main body device 20 are assumed to implement the third operating example periodically.

As shown in the drawing, in the front cover 10, the first communication unit 105a first of all determines whether or not a first other device was detected (step 31).

If a first other device was detected in step 31, the third communication unit 105c sends the information of the first other device to the main body device 20 (step 32), and the processing advances to step 33.

If a first other device was not detected in step 31, the front cover 10 advances the processing to step 33 without implementing step 32.

Meanwhile, in the main body device 20, the third communication unit 205c first of all determines whether or not information of a first other device was received from the front cover 10 (step 41).

If information of a first other device was received from the front cover 10 in step 41, the third communication unit 205c stores the location information of the first other device in the memory unit 204 (step 42), and the processing advances to step 43.

If information of a first other device was not received from the front cover 10 in step 41, the main body device 20 advances the processing to step 43 without implementing step 42.

Next, the second communication unit 205b determines whether or not it has been detected that a second other device has performed heating (step 43).

If it was detected in step 43 that a second other device has performed heating, the acquisition unit 206a acquires from the second communication unit 205b a notification that the second other device has performed heating (step 44). The crosschecking unit 206b then determines whether or not the information of the first other device stored in the memory unit 204 in step 42 contains the information of the second other device pertaining to the notification acquired in step 44 (step 45). If the information of the first other device contains the information of the second other device, the reporting unit 206c sends the location information of the second other device to the front cover 10 via the third communication unit 205c (step 46). Alternatively, in this case, the reporting unit 206c may output the location information of the second other device to the second communication unit 205b for display on an external device.

If it was not detected in step 43 that the second other device has performed heating, the main body device 20 terminates the processing without implementing steps 44-46.

If the information of the first other device did not contain the information of the second other device in step 45, the main body device 20 terminates the processing without implementing step 46.

Meanwhile, in the front cover 10, the third communication unit 105c determines whether or not the location information of the second other device was received from the main body device 20 (step 33).

If the location information of the second other device was received from the main body device 20 in step 33, the control unit 106 causes the notification unit 104 to display the location information of the second other device received by the third communication unit 105c (step 34). Alternatively, in this case, the control unit 106 may output the location information of the second other device to the first communication unit 105a for display on an external device.

If the location information of the second other device was not received from the main body device 20 in step 33, the front cover 10 terminates the processing without implementing step 34.

It should be noted that, in the third operating example, the second communication unit, memory unit, acquisition unit, crosschecking unit, and reporting unit were provided in the main body device 20, and the first communication unit was provided on the front cover 10, but this is not limiting. Any of the first communication unit, second communication unit, memory unit, acquisition unit, and reporting unit may be provided in the main body device 20, while the others may be provided on the front cover 10.

Any of the first communication unit, second communication unit, memory unit, acquisition unit, and reporting unit was provided in the main body device 20, while the others were provided on the front cover 10 in the third operating example, as described above. This makes it possible to simplify the structure of one of the front cover 10 and the main body device 20 as compared to the other.

### <Other Embodiments>

(1) Embodiments of the present disclosure were described above, but the technical scope of the present disclosure is not limited to the scope disclosed in the embodiments above. It will be obvious from the disclosure of the claims that the technical scope of the present disclosure also includes various modifications or improvements made to the embodiments above.
(2) The embodiments above described a case in which the junction between the front cover 10 and the main body device 20 forms a continuous and stepless joint with an integral external appearance, but the junction may also include a step or cutout, etc., provided that there is an integral external appearance with the main body device 20.
(3) The embodiments above described a case in which the aerosol source is a solid, but the aerosol source may equally be a liquid When the aerosol source is a liquid, a system is adopted in which the aerosol source is guided to a narrow tube known as a wick by using a capillary phenomenon, and a coil wound around the wick is heated to thereby vaporize the aerosol source.
(4) The embodiments above described an aerosol generating device which generates an aerosol by heating a solid aerosol source, but the aerosol generating device may equally generate an aerosol by separately heating each of a solid aerosol source and a liquid aerosol source. An aerosol generating device of this type is also referred to as a hybrid aerosol generating device.
(5) In the embodiments above, the charging circuit 102 is provided on the front cover 10, but it is equally possible to adopt a configuration in which the charging circuit 102 is not provided. In this case, the power supply unit 201B in the main body device 20 functions as the charging circuit 102.
(6) In the embodiments above, the secondary battery 101A on the front cover 10 was assumed to be a film-type lithium ion secondary battery or a capacitor, but the secondary battery 101A may equally be coin-shaped or chip-shaped.

### <Summary>

It should be noted that the present disclosure includes the following features.
(1) A generating device for generating an aerosol by heating a substrate that contains an aerosol source, the generating device comprising: a first communication unit which performs communication by a short-range wireless communication method, a second communication unit which performs communication by a wireless communication method that also enables communication over a longer distance than a communication distance of the first communication unit; a memory unit for storing information of a first other device, which is another generating device that has been present for more than a predetermined time within a predetermined distance, the information being detected via the first communication unit; an acquisition unit for acquiring, via the second communication unit, a notification that the other generating device has performed heating; and a reporting unit which, when the information of the first other device stored in the memory unit contains information of a second other device, which is another generating device, based on the notification acquired by the acquisition unit, either outputs location information of said second other device via the first communication unit or the second communication unit, or causes a display unit to display said location information of the second other device.
(2) The generating device as disclosed in (1), comprising: a main body having a heating unit for heating a substrate that contains an aerosol source; and a cover which permits heating of the heating unit by means of the main body, as a result of the cover being attached to the main body, wherein the first communication unit, the second communication unit, the memory unit, the acquisition unit, and the reporting unit are provided in the main body.
(3) The generating device as disclosed in (1), comprising: a main body having a heating unit for heating a substrate that contains an aerosol source; and a cover which permits heating of the heating unit by means of the main body, as a result of the cover being attached to the main body, wherein any of the first communication unit, the second communication unit, the memory unit, the acquisition unit, and the reporting unit is provided in the main body, while the others are provided on the cover.
(4) The generating device as disclosed in (3), wherein the first communication unit is provided on the cover, and the second communication unit, the memory unit, the acquisition unit, and the reporting unit are provided in the main body.
(5) A cover which is attached to a main body having a heating unit for heating a substrate that contains an aerosol source and thereby permits heating of the heating unit by means of the main body, the cover comprising: a first communication unit which performs communication by a short-range wireless communication method; a second communication unit which performs communication by a wireless communication method that also enables communication over a longer distance than a communication distance of the first communication unit; a memory unit for storing information of a first other cover, which is another cover that has been present for more than a predetermined time within a predetermined distance, the information being detected via the first communication unit; an acquisition unit for acquiring, via the second communication unit, a notification that the main body to which the other cover is attached has performed heating; and a reporting unit which, when the information of the first other cover stored in the memory unit contains information of a second other cover, which is another cover, based on the notification acquired by the acquisition unit, either outputs location information of said second other cover via the first communication unit or the second communication unit, or causes a display unit to display said location information of the second other cover.

### [Reference Signs List]

1... Aerosol generating device; 10... Front cover, 10C, 20C... Magnet; 20... Main body device; 101A, 201A... Secondary battery; 20B... Button; 21... Connector; 22... Hole; 30... Shutter, 101, 201... Power source unit; 101B... Step-up/step-down DC/DC circuit; 102... Charging circuit; 103... Electrical supply circuit; 104... Notification unit; 105... Communication unit; 106... Control unit; 201B... Power supply unit; 202... Sensor unit; 203... Notification unit; 204... Memory unit; 205... Communication unit; 206... Control unit; 207... Heating unit; 208... Heat insulating portion; 209... Holding portion; 210... Stick-type substrate

## Claims

1. A generating device for generating an aerosol by heating a substrate that contains an aerosol source, the generating device comprising:
a first communication unit which performs communication by a short-range wireless communication method;
a second communication unit which performs communication by a wireless communication method that also enables communication over a longer distance than a communication distance of the first communication unit;
a memory unit for storing information of a first other device, which is another generating device that has been present for more than a predetermined time within a predetermined distance, the information being detected via the first communication unit;
an acquisition unit for acquiring, via the second communication unit, a notification that the other generating device has performed heating; and
a reporting unit which, when the information of the first other device stored in the memory unit contains information of a second other device, which is another generating device, based on the notification acquired by the acquisition unit, either outputs location information of said second other device via the first communication unit or the second communication unit, or causes a display unit to display said location information of the second other device.

2. The generating device as claimed in claim 1, comprising: a main body having a heating unit for heating a substrate that contains an aerosol source; and
a cover which permits heating of the heating unit by means of the main body, as a result of the cover being attached to the main body,
wherein the first communication unit, the second communication unit, the memory unit, the acquisition unit, and the reporting unit are provided in the main body.

3. The generating device as claimed in claim 1, comprising: a main body having a heating unit for heating a substrate that contains an aerosol source; and
a cover which permits heating of the heating unit by means of the main body, as a result of the cover being attached to the main body,
wherein any of the first communication unit, the second communication unit, the memory unit, the acquisition unit, and the reporting unit is provided in the main body, while the others are provided on the cover.

4. The generating device as claimed in claim 3, wherein the first communication unit is provided on the cover, and
the second communication unit, the memory unit, the acquisition unit, and the reporting unit are provided in the main body.

5. A cover which is attached to a main body having a heating unit for heating a substrate that contains an aerosol source and thereby permits heating of the heating unit by means of the main body, the cover comprising:
a first communication unit which performs communication by a short-range wireless communication method;
a second communication unit which performs communication by a wireless communication method that also enables communication over a longer distance than a communication distance of the first communication unit;
a memory unit for storing information of a first other cover, which is another cover that has been present for more than a predetermined time within a predetermined distance, the information being detected via the first communication unit;
an acquisition unit for acquiring, via the second communication unit, a notification that the main body to which the other cover is attached has performed heating; and
a reporting unit which, when the information of the first other cover stored in the memory unit contains information of a second other cover, which is another cover, based on the notification acquired by the acquisition unit, either outputs location information of said second other cover via the first communication unit or the second communication unit, or causes a display unit to display said location information of the second other cover.
